(19)

Europäisches
Patentamt
European
Patent Office
Office européen
des brevets

(11)     EP 3 336 611 B1

(12)                  EUROPEAN PATENT SPECIFICATION

(45) Date of publication and mention
    of the grant of the patent:
    **02.10.2019  Bulletin 2019/40**

(51) Int Cl.:
    *G03G 15/16* (2006.01)      *B29D 29/00* (2006.01)

(21) Application number: **17206356.2**

(22) Date of filing: **11.12.2017**

(54) **ELECTROPHOTOGRAPHIC BELT AND ELECTROPHOTOGRAPHIC IMAGE FORMING APPARATUS**

ELEKTROFOTOGRAFISCHES BAND UND ELEKTROFOTOGRAFISCHE BILDGEBUNGSVORRICHTUNG

COURROIE ÉLECTROPHOTOGRAPHIQUE ET APPAREIL DE FORMATION D'IMAGE ÉLECTROPHOTOGRAPHIQUE

(84) Designated Contracting States:
    **AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2016  JP 2016245630**

(43) Date of publication of application:
    **20.06.2018  Bulletin 2018/25**

(73) Proprietor: **Canon Kabushiki Kaisha Tokyo, Tokyo 146-8501 (JP)**

(72) Inventor: **UCHIDA, Kouichi Tokyo 146-8501 (JP)**

(74) Representative: **TBK Bavariaring 4-6 80336 München (DE)**

(56) References cited:
    **WO-A1-2011/034013      JP-A- 2001 302 890**
    **JP-A- 2002 285 017      US-A1- 2016 202 639**

**Description**

BACKGROUND OF THE INVENTION

Field of the Invention

The present invention relates to an electrophotographic belt such as a conveyor transfer belt and an intermediate transfer belt for use in an electrophotographic image forming apparatus such as a copier and a printer, and an electrophotographic image forming apparatus having the electrophotographic belt.

Description of the Related Art

In an electrophotographic image forming apparatus, an electrophotographic belt is used as a conveyor transfer belt and an intermediate transfer belt for temporarily transferring and holding a toner image. The electrophotographic belt contacts other components in an electrophotographic image forming apparatus so as to slide thereon, so that the presence of convex portions on the surface of the electrophotographic belt may cause scratches to the other components. For example, the surface of an electrophotographic belt for use as an intermediate transfer belt contacts an electrophotographic photoreceptor when a toner image is formed, so that the presence of convex portions on the electrophotographic belt cause scratches on the surface of the electrophotographic photoreceptor in some cases. In recent years, long service life of a toner cartridge has tended to be required from the viewpoint of cost reduction in competition with other printing methods, so that an electrophotographic belt with extremely low occurrence frequency of convex portions has been required in order not to cause scratches on the surface of electrophotographic photoreceptor of a toner cartridge.

Japanese Patent Application Laid-Open No. H11-237795 discloses that when a conductive filler is mixed with a base polymer so that a seamless belt exhibits conductivity or semiconductivity, convex portions may be formed on the surface of a seamless belt due to poor dispersion of conductive filler in some cases. Japanese Patent Application Laid-Open No. H11-237795 discloses also that by using an annular die having a filter member as annular die in extrusion molding of a molten resin, a seamless belt can be obtained, having a height of the highest convex portion on the surface of 40 μm or less, and a slope of the height of the convex portion of 20 μm/m. Meanwhile, Japanese Patent Application Laid-Open No. 2014-132329 discloses a conductive belt using polyether ester amide having excellent dispersibility with a thermoplastic polyester resin as conductive material.

The present inventors further examined Japanese Patent Application Laid-Open No. 2014-132329. As a result, it was found that even the electrophotographic belt including polyether ester amide dispersed at a nano-order level in a thermoplastic polyester resin had convex portions on the surface in some cases.

US 2016/202639 A1 describes a semiconductive resin composition which includes a plurality of thermoplastic resins forming a sea-island structure including a sea portion and an island portion; and a plurality of conductive fillers. The sea portion includes at least two of the thermoplastic resins, at least one of the at least two of the thermoplastic resins is a copolymer.

WO 2011/034013 A1 describes an electrophotographic belt which includes a thermoplastic resin composition obtained by melt-kneading a thermoplastic polyester resin, at least one selected from polyether ester amide and polyether amide, and particles having a certain core-shell structure.

JP 2001 302890 A describes a polyester resin composition which can be composed of (A) a polyester resin (polybutylene terephthalate resin or the like), (B) a polyetheresteramide and (C) a rubber-containing styrene-based resin (ABS or the like).

JP 2002 285017 A describes a resin composition which consists of a thermoplastic resin (A) having an ester linkage and polyetheresteramide (B) and contains an acidic phosphoric ester (C) and a salt (D) of an alkali metal and/or an alkaline earth metal wherein the weight ratio of (C)/(D) is 1-50 and the total weight of (C) and (D) is 0.001-5.0 wt.% of the total weight of the thermoplastic resins.

SUMMARY OF THE INVENTION

An aspect of the present invention is directed to providing an electrophotographic belt capable of suppressing the occurrence of scratches on an electrophotographic photoreceptor, when used as an intermediate transfer belt. Another aspect of the present invention is directed to providing an electrophotographic image forming apparatus capable of forming high-quality electrophotographic images.

According to an aspect of the present invention, there is provided an electrophotographic belt as defined in claim 1.

According to another aspect of the present invention, an electrophotographic image forming apparatus having the electrophotographic belt as an intermediate transfer belt is provided.

Further features of the present invention will become apparent from the following description of exemplary embodiments with reference to the attached drawings.

BRIEF DESCRIPTION OF THE DRAWINGS

FIG. 1 is a schematic drawing illustrating an example of a full-color image forming apparatus using an electrophotographic process.
FIG. 2 is a schematic drawing illustrating an example of an injection molding apparatus.
FIG. 3 is a schematic drawing illustrating an example of the method for manufacturing an electrophotographic belt using a stretch blow molding machine.

DESCRIPTION OF THE EMBODIMENTS

Preferred embodiments of the present invention will now be described in detail in accordance with the accompanying drawings.

Investigation for obtaining an electrophotographic belt with low occurrence frequency of convex portions was made by the present inventors. In the process of investigation, the present inventors examined the cause of the occurrence of convex portions in an electrophotographic belt including polyether ester amide dispersed at a nano-order level in a thermoplastic polyester resin. As a result, it was found that during preparation of a melt-kneaded product including the thermoplastic polyester resin and the polyether ester amide, a cross-linked product is formed from the origination point of zirconium contained in the melt-kneaded product, and the convex portions arise from the cross-linked product. The present inventors, therefore, found that by reducing the occurrence frequency of the cross-linked product derived from zirconium, the occurrence of convex portions on the surface of an electrophotographic belt can be effectively suppressed.

The electrophotographic belt in an embodiment of the present invention is described in detail as follows. The present invention, however, is not limited to the following embodiment.

The electrophotographic belt in the present embodiment has a resin layer including a melt-kneaded product including a thermoplastic polyester resin, a polyether ester amide, and a zirconium-containing compound. Each of these materials is described as follows.

<Thermoplastic polyester resin>

A thermoplastic polyester resin can be obtained by polycondensation of a dicarboxylic acid component and a dihydroxy component, polycondensation of an oxycarboxylic acid component or a lactone component, or polymerization using a plurality of these components. The thermoplastic polyester resin may be a homopolyester or a copolyester.

Examples of the dicarboxylic acid component include the following: an aromatic dicarboxylic acid (e.g. an aromatic dicarboxylic acid having 8 to 16 carbon atoms (C8 to C16) in a molecule such as terephthalic acid, isophthalic acid, phthalic acid, naphthalene dicarboxylic acid (e.g. 2,6-naphthalene dicarboxylic acid), diphenyl dicarboxylic acid, diphenyl ether dicarboxylic acid, diphenyl methane dicarboxylic acid, and diphenyl ethane dicarboxylic acid); an alicyclic dicarboxylic acid (e.g. a C4 to C10 cycloalkane dicarboxylic acid such as cyclohexane dicarboxylic acid); an aliphatic dicarboxylic acid (e.g. a C4 to C12 aliphatic dicarboxylic acid such as succinic acid, adipic acid, acid, azelaic acid and sebacic acid), and a derivative of the dicarboxylic acids. Examples of the derivative include a derivative from which an ester can be formed (e.g. a lower alkyl ester such as dimethyl ester, an acid anhydride, and an acid halide such as an acid chloride) . The dicarboxylic acid components may be used singly or in combinations of two or more. From the viewpoints of crystallinity and resistance to heat, the dicarboxylic acid is preferably an aromatic dicarboxylic acid, more preferably terephthalic acid, isophthalic acid and naphthalene dicarboxylic acid.

Examples of the dihydroxy component include the following: an aliphatic diol (e.g. a C2 to C10 alkylene diol such as ethylene glycol, propylene glycol, 1,3-butane diol, 1,4-butane diol, neopentyl diol, and hexane diol), an alicyclic diol (e.g. a C4 to C12 alicyclic diol such as cyclohexane diol, cyclohexane dimethanol) an aromatic diol (e.g. a C6 to C20 aromatic diol such as hydroquinone, resorcin, dihydroxybiphenyl, naphthalene diol, dihydroxy diphenyl ether, and 2,2-bis(4-hydroxyphenyl)propane(bisphenol A)), an alkylene oxide adduct of the aromatic diol (e.g. a C2 to C4 alkylene oxide adduct of bisphenol A), and a polyoxyalkylene glycol (e.g. a polyoxy C2 to C4 alkylene glycol such as diethylene glycol, polyoxyethylene glycol, polyoxypropylene glycol, and polytetramethylene ether glycol). The dihydroxy components may be a derivative from which an ester can be formed (e.g. an alkyl group, an alkoxyl group, and a halogen substitute). The dihydroxy components may be used singly or in combinations of two or more. From the viewpoints of crystallinity, resistance to heat, etc., among the dihydroxy components, an alkylene diol (a C2 to C4 alkylene diol, in particular) or an alicyclic diol can be used.

Examples of the oxycarboxylic acid component include the following: an oxycarboxylic acid such as oxybenzoic acid, oxynaphthoic acid, diphenylene oxycarboxylic acid, and 2-hydroxypropanoic acid, and a derivative of the oxycarboxylic acids. The oxycarboxylic acid components may be used singly or in combinations of two or more.

Examples of the lactone component include a C3 to C12 lactone such as propiolactone, butyrolactone, valerolactone and caprolactone (e.g. ε- caprolactone). The lactone components also may be used singly or in combinations of two or more.

Furthermore, within a range where the crystallinity and the resistance to heat can be maintained, a multifunctional monomer may be used in combination. Examples of the multifunctional monomer include a polycarboxylic acid such as trimellitic acid, trimesic acid and pyromellitic acid, and a polyalcohol such as glycerin, trimethylolpropane, trimethylolethane and pentaerythritol. A polyester having a branched or cross-linked structure produced from use of such a polyfunctional monomer can be also used.

As the thermoplastic polyester resin, a polyester resin that can be obtained by polycondensation of the components (a dicarboxylic acid component and a dihydroxy component, an oxycarboxylic acid component, a lactone component, or a plurality of the components) may be used. From the viewpoints of the crystallinity, the resistance to heat, etc., the thermoplastic polyester resin can be at least one selected from the group consisting of a polyalkylene terephthalate, a polyalkylene naphthalate, and a block/random copolymer of a polyalkylene terephthalate and a polyalkylene isophthalate. Examples of the copolymer include a block copolymer and a random copolymer. The alkylene in the polyalkylene terephthalate, the polyalkylene isophthalate, or the polyalkylene naphthalate can have 2 or more and 16 or less carbon atoms, from the viewpoints of the crystallinity and the resistance to heat. At least one selected from the group consisting of polyethylene terephthalate, a block/random copolymer of polyethylene terephthalate and polyethylene isophthalate, and polyethylene naphthalate is more preferred.

The thermoplastic polyester resin may be a blended product or an alloy of two or more types. Specific examples of the polyethylene naphthalate include commercially available TN-8050SC (trade name, manufactured by TEIJIN LIMITED) and TN-8065S (trade name, manufactured by TEIJIN LIMITED). Examples of the polyethylene terephthalate include commercially available TR-8550 (trade name, manufactured by TEIJIN LIMITED), and examples of the copolymer of polyethylene terephthalate and polyethylene isophthalate include commercially available PIFG30 (trade name, manufactured by Bell Polyester Products, Inc.).

The intrinsic viscosity of the thermoplastic polyester resin is preferably 1.4 dl/g or less, more preferably 0.3 dl/g or more and 1.2 dl/g or less, still more preferably 0.4 dl/g or more and 1.1 dl/g or less. With an intrinsic viscosity of 1.4 dl/g or less, reduction in fluidity of the electrophotographic belt during shaping can be suppressed. With an intrinsic viscosity of 0.3 dl/g or more, the strength and durability of the electrophotographic belt can be easily improved.

The intrinsic viscosity of the thermoplastic polyester resin is a measured value for an o-chlorophenol solution of the polyester at a concentration of 0.5 mass%, at 25°C.

The content of the thermoplastic polyester resin is preferably 50 mass% or more, 60 mass% or more in particular, and still more preferably 70 mass% or more based on the mass of the melt-kneaded product. With the content being 50 mass% or more, reduction in durability of the electrophotographic belt can be remarkably prevented.

<Polyether ester amide>

Examples of the polyether ester amide include a compound of which main component is a copolymer including a polyamide block unit such as nylon 6, nylon 66, nylon 11 and nylon 12, and a polyether ester unit. Specific examples thereof include a copolymer derived from the salt of a lactam (e.g. caprolactam and lauryl lactam) or amino carboxylic acid, polyethylene glycol, and a dicarboxylic acid.

Specific examples of the dicarboxylic acid include terephthalic acid, isophthalic, adipic acid, azelaic acid, sebacic acid, undecanedioic acid and dodecanedioic acid. The polyether ester amide can be manufactured by a known polymerization method such as melt polymerization, though not limited thereto. The polyether ester amide may be a blended product or alloy of two or more types. Alternatively, a commercially available polyether ester amide, e.g. (trade name: IRGASTAT P20, manufactured by BASF Japan Ltd.), (trade name: TPAE-H151, manufactured by T&K TOKA Corporation), (trade name: TPAE-10HP-10, manufactured by T&K TOKA Corporation), and (trade name: PELESTAT NC6321, manufactured by Sanyo Chemical Industries, Ltd.), may be used.

The content of the polyether ester amide is preferably 3 mass% or more and 30 mass% or less, particularly preferably 5 mass% or more and 20 mass% or less based on the mass of the melt-kneaded product comprising the thermoplastic polyester resin and the polyether ester amide. The polyether ester amide functions as a conducting agent. With the content being 3 mass% or more, the electrical resistance of the thermoplastic resin mixture, and by extension, the electrophotographic belt can be moderately reduced. With the content being 30 mass% or less, reduction in viscosity of the thermoplastic resin mixture due to the decomposition of polyether ester amide can be more favorably suppressed, so that the durability of the shaped electrophotographic belt can be further improved.

<Zirconium-containing compound>

Examples of the zirconium-containing compound include an organic zirconium compound from the viewpoint of an additive for maintaining the resistance to heat of the polyether ester amide and the viewpoint of a polymerization catalyst for improving the polymerization degree of the polyether ester amide.

Specific examples thereof include the following: zirconium tetraacetylacetonate, zirconium monoacetylacetonate, zirconium ethylacetoacetate, zirconium octylate, zirconium stearate, zirconium sulfate tetrahydrate, and zirconium nitrate dihydrate.

The zirconium-containing compound may be used singly or in combinations of two or more.

In order to effectively suppress the occurrence of convex portions on the outer surface of the electrophotographic belt, the melting point of the zirconium-containing compound can be equal to or lower than the melting point of the thermoplastic polyester resin. The melting point of each of the zirconium-containing compound described above is as follows.

zirconium tetraacetylacetonate: 192°C
zirconium monoacetylacetonate: 188°C
zirconium ethylacetoacetate: 65°C
zirconium octylate: 65°C
zirconium stearate: 70°C
zirconium sulfate tetrahydrate: 100°C
zirconium nitrate dihydrate: 100°C

The content of the zirconium-containing compound is preferably 10 ppm or more and 10000 ppm or less, particularly preferably 30 ppm or more and 1000 ppm or less, calculated as the amount of elemental zirconium, based on the mass of the melt-kneaded product. With the content being 10 ppm or more, the resistance to heat of the polyether ester amide can be effectively maintained, so that the occurrence of a foreign substance due to thermal degradation of the polyether ester amide can be suppressed. With the content being 10000 ppm or less, increase in the viscosity of the thermoplastic resin mixture can be suppressed, so that the shapability of the electrophotographic belt can be favorable.

<Number of convex portions derived from zirconium-containing compound>

The objects identified as convex portions on the outer surface of an electrophotographic belt are convex portions having a height of 6 $\mu$m or more measured by a confocal laser microscope. The term "outer surface" means the surface carrying a toner image when the electrophotographic belt is used as an intermediate transfer belt.

The number of convex portions on the outer surface of an electrophotographic belt derived from the zirconium-containing compound is 10 pieces or less per unit area (1.0 m$^2$) of the surface of the electrophotographic belt. In other words, the number of convex portions is 10 pieces/m$^2$ or less. With the number of convex portions being more than 10 pieces/m$^2$, the frequency of damaging the surface of a photosensitive drum increases, resulting in degradation of image quality. From the viewpoint of suppressing the frequency of damaging the surface of a photosensitive drum as much as possible, the number of convex portions is more preferably 5 pieces/m$^2$ or less, still more preferably 0 pieces/m$^2$.

The maximum height of the convex portions is 20 $\mu$m or less. With a maximum height of the convex portions of 20 $\mu$m or less, abrasion of the blade for cleaning the transfer residual toner on the outer surface of an electrophotographic belt can be better suppressed, and the primary transfer of a toner image to the outer surface of an electrophotographic belt from electrophotographic photoreceptor can be more accurately performed.

<Additive>

The electrophotographic belt may contain other components within a range where the effect of the present invention is not impaired, and examples of the other component include the following: a thermoplastic resin other than the thermoplastic polyester resin and polyether ester amide, an ionic conductive agent other than polyether ester amide (e.g. an ionic polymer conductive agent, and a surfactant), a conductive polymer, an antioxidant (e.g. hindered phenol-based, phosphorus-based, and sulfur-based), an ultraviolet absorber, an organic pigment, an inorganic pigment, a PH conditioner, a cross-linking agent, a compatibilizer, an antihydrolysis agent, a mold releasing agent (e.g. silicone-based and fluorine-based) a coupling agent, a lubricant, an insulating filler (zinc oxide, barium sulfate, calcium sulfate, barium titanate, potassium titanate, strontium titanate, titanium oxide, magnesium oxide, magnesium hydroxide, aluminum hydroxide, talc, mica, clay, kaolin, hydrotalcite, silica, silicone particles, alumina, ferrite, calcium carbonate, barium carbonate, nickel carbonate, glass powder, quartz powder, glass fiber, alumina fiber, potassium titanate fiber, and thermosetting resin particles), a conductive filler (e.g. carbon black, carbon fiber, carbon nanotube, carbon nanofiber, conductive titanium oxide, conductive tin oxide and conductive mica). These may be used singly or in combinations of two or more.

<Electrophotographic belt and manufacturing method thereof>

The electrophotographic belt in the present embodiment has a resin layer including a melt-kneaded product including a thermoplastic polyester resin, a polyether ester amide, and a zirconium-containing compound.

The electrophotographic belt is manufactured through the following steps (1) to (6) which are further specified in the following paragraphs.

(1) providing a polyether ester amide containing a zirconium-containing compound;
(2) preparing a solution of the polyether ester amide;
(3) removing foreign substances derived from the zirconium-containing compound by filtering the solution;
(4) collecting the polyether ester amide from the solution;
(5) preparing a resin mixture comprising the polyether ester amide collected in the step (4) and a thermoplastic polyester resin; and
(6) shaping an electrophotographic belt from the resin mixture.

The step (1) includes the step of producing a cross-linked product derived from a zirconium-containing compound in the polyether ester amide in advance by heating the polyether ester amide including the zirconium-containing compound at a temperature equal to or higher than the melting point of the polyether ester amide, for example, at a temperature of 250°C or higher and 310°C or lower using, for example, a twin screw extruder. Inclusion of this step and the removal of the cross-linked product in the subsequent steps (2) to (3) allow the production of the cross-linked product derived from the zirconium-containing compound to be suppressed in the step (5) of melt-kneading the thermoplastic polyester resin and the polyether ester amide.

The steps (1) to (4) are extremely effective as units for reducing the number of convex portions derived from the zirconium-containing compound on the outer surface of an electrophotographic belt.

In the step (2), the solvent for use in preparation of the solution of polyether ester amide is not particularly limited as long as the polyether ester amide can be dissolved. Examples of the solvent include phenol.

For use in filtering in the step (3), a membrane filter having a pore size of, for example, 5 to 20 μm can be used.

In shaping an electrophotographic belt from the resin mixture in the step (6), for example, the step of shaping the pelletized resin mixture by a known shaping method such as a continuous melt extrusion method, an injection molding method, a stretch blow molding method, or an inflation molding method is included. In particular, as the method for shaping an electrophotographic belt having an endless belt shape, use of a continuous melt extrusion method or a stretch blow molding method is particularly preferred.

Examples of the continuous melt extrusion method include an internally cooled mandrel method for downward extrusion capable of precisely controlling the inner diameter of the extruded tube, and a vacuum sizing method.

The stretch blow molding method includes the steps of shaping a preform of the resin mixture, heating the preform, mounting the heated preform in a mold and then injecting a gas into the shaping mold for stretch molding, and cutting the stretch-molded product obtained in the stretch molding to obtain a belt. As the mold for shaping a belt, a mold for shaping a seamless belt can be used, and a seamless electrophotographic belt can be thereby obtained.

The thickness of the electrophotographic belt is preferably 10 μm or more and 500 μm or less, particularly preferably 30 μm or more and 150 μm or less. The electrophotographic belt of the present invention may be not only used as a belt but also used for winding or covering around a drum or roll as component for electrophotography. Also, in order to improve the mold releasability of toner from the electrophotographic belt of the present invention, a surface layer may be provided on the electrophotographic belt as a base layer. Furthermore, the electrophotographic belt may have still another layer between the base layer and the surface layer, on the inner face of the base layer, or on the surface layer.

The electrophotographic belt of the present invention may be used in any application without particular limitation, and suitably used as an intermediate transfer belt, a conveyor transfer belt, or a photoreceptor belt. In particular, the belt can be suitably used as an intermediate transfer belt. The electrophotographic belt for use as an intermediate transfer belt can have a volume resistivity of $1\times10^2$ Ωcm or more and $1\times10^{14}$ Ωcm or less. With a volume resistivity of $1\times10^2$ Ωcm or more, the resistance can be prevented from decreasing remarkably, and the transfer electric field can be easily obtained, so that the occurrence of a white spot or coarseness in an image can be remarkably prevented. With a volume resistivity of $1\times10^{14}$ Ωcm or less, increase in transfer voltage can be suppressed. Consequently, the increase in size and cost of a power supply can be prevented.

<Electrophotographic image forming apparatus>

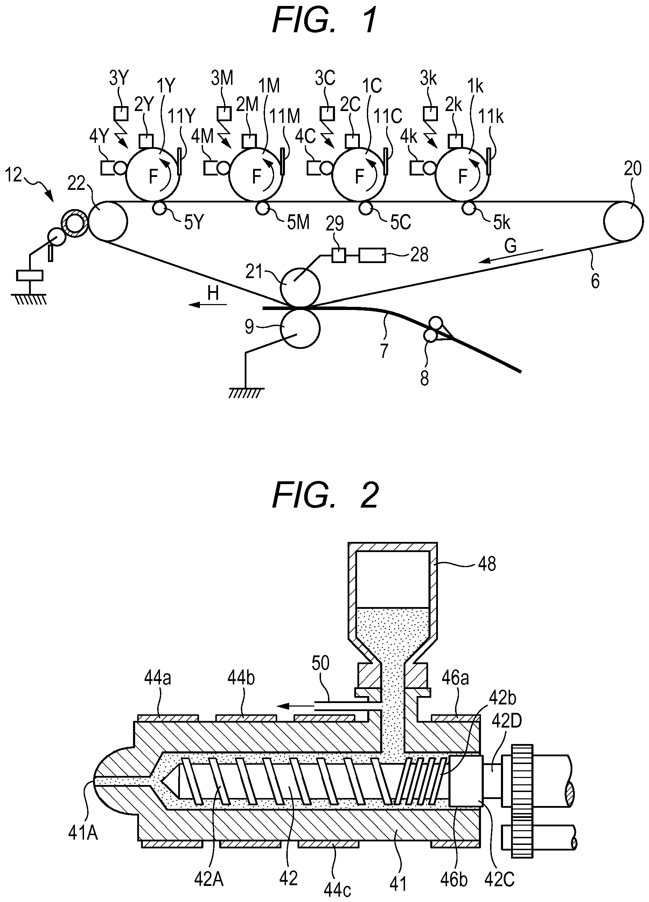

The electrophotographic image forming apparatus in an embodiment of the present invention is provided with the electrophotographic belt in the present embodiment as an intermediate transfer belt. With reference to FIG. 1, an embodiment of the electrophotographic image forming apparatus is described. The image forming apparatus in the present embodiment has a so-called tandem structure with multi-color image forming stations arranged in the rotation direction of an electrophotographic belt (hereinafter referred to as an "intermediate transfer belt"). In the following description, subscripts Y, M, C and k are attached to the symbols of the structures relating to the colors, yellow, magenta, cyan and black, respectively, though the subscripts may be omitted when the structures are the same.

Symbols 1Y, 1M, 1C and 1k in FIG. 1 represent photosensitive drums (photoreceptors and image carriers). On the circumference of the photosensitive drums 1, charging apparatuses 2Y, 2M, 2C and 2k, exposure apparatuses 3Y, 3M, 3C and 3k, development apparatuses 4Y, 4M, 4C and 4k, and an intermediate transfer belt (intermediate transfer body) 6 are arranged. The photosensitive drum 1 is rotated in the arrow F direction at a predetermined peripheral velocity (process speed). The charging apparatus 2 allows the circumferential surface of the photosensitive drum 1 to be charged in a predetermined polarity at a predetermined voltage (primary charging). A laser beam scanner as the exposure apparatus 3 outputs on/off modulated laser light corresponding to the image data inputted from external equipment such as an image scanner and a computer not illustrated in drawing, so that the charged surface on the photosensitive drum 1 is scanned and exposed. An electrostatic latent image corresponding to the objective image data is formed on the surface of the photosensitive drum 1 by the scanning exposure.

The development apparatuses 4Y, 4M, 4C and 4k include toners of color components yellow (Y), magenta (M), cyan (C), and black (k), respectively. Based on the image data, a development apparatus 4 is selected to develop a developer (toner) on the surface of the photosensitive drum 1, so that the electrostatic latent image is visualized as a toner image. In the present embodiment, a reversal development method for applying toner to the exposed part of an electrostatic latent image is employed in the development in this way. Such a charging apparatus, an exposure apparatus, and a development apparatus constitute an image forming unit.

The intermediate transfer belt 6 is an endless belt that is arranged in contact with the surface of the photosensitive drums 1, and stretched by a plurality of stretching rollers 20, 21 and 22. The intermediate transfer belt 6 is rotated in the arrow G direction. In the present embodiment, the stretching roller 20 is a tension roller that controls the tension of the intermediate transfer belt 6 to be constant, the stretching roller 22 is a drive roller of the intermediate transfer belt 6, and the stretching roller 21 is a counter roller for secondary transfer. At the primary transfer positions opposed to the photosensitive drums 1 across the intermediate transfer belt 6, primary transfer rollers 5Y, 5M, 5C and 5k are arranged, respectively.

The unfixed toner images of each color formed on the photosensitive drums 1, respectively, are sequentially primary-transferred onto the intermediate transfer belt 6 in an electrostatic manner by application of a primary transfer bias in a polarity (e.g. positive polarity) reverse to the charge polarity of toner to the primary transfer rollers 5 from a constant voltage source or a constant current source. Consequently, unfixed 4-color toner images are superimposed on the intermediate transfer belt 6, so that a full-color image is obtained. The intermediate transfer belt 6 rotates the carried toner images transferred from the photosensitive drums 1 in this way. For each rotation of the photosensitive drum 1 after the primary transfer, the surface of the photosensitive drum 1 is cleaned with a cleaning apparatus 11 to clean off the transfer residual toner, and the step of image forming is then repeated.

At the position of secondary transfer of the intermediate transfer belt 6 facing the conveyance path of a recording material 7, a secondary transfer roller (transfer part) 9 is pressed against the toner image-carrying face of the intermediate transfer belt 6. At the secondary transfer position on the rear face of the intermediate transfer belt 6, a counter roller 21 to make a counter electrode of the secondary transfer roller 9 is disposed, to which a bias is applied. When a toner image on the intermediate transfer belt 6 is transferred to the recording material 7, a bias in the same polarity as the toner is applied to the counter roller 21 by a transfer bias application unit 28. For example, a bias of -1000 to -3000 V is applied and a current of -10 to -50 μA flows. On this occasion, the transfer voltage is detected by a transfer voltage detection unit 29. Furthermore, at the downstream of the secondary transfer position, a cleaning apparatus (belt cleaner) 12 is provided to remove the residual toner on the intermediate transfer belt 6 after the secondary transfer.

The recording material 7 introduced to the secondary transfer position is clamped and conveyed at the secondary transfer position. On this occasion, a constant voltage bias (transfer bias) controlled at a predetermined value is applied to the counter roller 21 of the secondary transfer roller 9 from a secondary transfer bias application unit 28. The transfer bias in the same polarity as the toner is applied to the counter roller 21, so that superimposed full 4-color images (toner image) at the transfer region on the intermediate transfer belt 6 are transferred altogether onto the recording material 7. Consequently, a full color unfixed toner image is formed on the recording material. The recording material 7 with the toner image received is introduced into a fixation apparatus not illustrated in drawing for thermal fixation.

According to an embodiment of the present invention, an electrophotographic belt with the occurrence frequency of convex portions damaging a photosensitive drum suppressed as much as possible can be obtained. Furthermore, according to another embodiment of the present invention, an electrophotographic image forming apparatus capable of forming a high-quality electrophotographic image can be obtained.

Examples

Examples and Comparative Examples are shown as follows so as to specifically describe the present invention, though the present invention is not limited thereto. The measurement and evaluation methods of the characteristics of electrophotographic belts manufactured in Examples and Comparative Examples are as described in the following [Evaluation 1] to [Evaluation 4].

[Evaluation 1] Number and height of convex portions on the belt surface

The presence or absence of convex portions in the overall surface of an electrophotographic belt was confirmed using a digital microscope (VHX-500, manufactured by KEYENCE CORPORATION) with a magnifying power of 5. Subsequently, in regard to all of the convex portions observed, each convex portion together with the peripheral flat part thereof was observed using a confocal laser microscope (OPTELICS C130, manufactured by Lasertec Corporation) with a magnifying power of 20. A cross-sectional image with the center of a foreign substance as reference was obtained. The flat parts on both sides of the foreign substance were connected by a straight line to make a reference line. The maximum height extending from the reference line in the direction vertical to the convex portion was defined as the height of the convex portion. Among them, the number and the height of the convex portions having a height of 6 $\mu$m or more were measured. The area of the surface of electrophotographic belt was measured and the number of convex portions per unit area (1.0 m$^2$) of the surface of electrophotographic belt was obtained based on the following equation (1).

$$N1=Nt/S \ \ .... \ \ (1)$$

N1: number of convex portions per unit area (1.0 m$^2$) of the surface of electrophotographic belt (pieces/m$^2$);
Nt: number of convex portions in the surface of electrophotographic belt (pieces);
S: surface area of electrophotographic belt (m$^2$).

The convex portions of the outer surface of electrophotographic belt were subjected to surface observation using a FE-SEM (XL30-SFEG, manufactured by FEI Company) with a magnifying power of 10000, in parallel with elemental analysis using an auxiliary EDX. With a peak of zirconium detected, it was determined that the convex portion was a "convex portion derived from zirconium."

[Evaluation 2] Zirconium content in belt

From an electrophotographic belt, 0.2 g (5-cm square) of a specimen was sampled and put in 10 g of nitric acid and 10 g of sulfuric acid so as to be thermally decomposed at 80°C for 12 hours. Subsequently, 15 g of dilute nitric acid and 15 g of dilute hydrofluoric acid were added thereto, and heated to 40°C for dissolution. The amount of elemental zirconium in the solution was measured using an ICP emission spectrometer (SPS4000, manufactured by Seiko Instruments Inc.), so that the zirconium content in the electrophotographic belt was obtained. The specimens were sampled at 5 spots equally spaced in the circumferential direction (360°) of the electrophotographic belt. The average of the measured values at the 5 spots was calculated.

[Evaluation 3] Transfer properties of convex portions on belt surface and image properties

An electrophotographic belt as an intermediate transfer belt was mounted on the transfer unit of a tandem-type full-color electrophotographic apparatus (trade name: LBP-7600C, manufactured by Canon Inc.) having the structure illustrated in FIG. 1, and a solid cyan image and a solid magenta image were printed on a recording medium. For use as the recoding medium, a sheet of glossy paper was left standing in an environment at a temperature of 23°C and a relative humidity of 45% for 1 day. With the presence of a convex portion in an electrophotographic belt, a white spot having a size corresponding to the convex portion can be confirmed in the solid image thus obtained. In the evaluation results, ranking was made based on the following criteria.

Rank A: No white spots are confirmed.
Rank B: Although white spots can be confirmed, the image quality is not affected thereby.

Rank C: White spots can be confirmed, resulting in degradation of the image quality.

[Evaluation 4] Confirmation of occurrence of scratches in surface layer of photosensitive drum caused by convex portions on belt surface

An electrophotographic belt as an intermediate transfer belt was mounted on the transfer unit of a tandem-type full-color electrophotographic apparatus (trade name: LBP-7600C, manufactured by Canon Inc.) having the structure illustrated in FIG. 1, and the apparatus was operated to slide the intermediate transfer belt in close contact with photosensitive drums corresponding to the equivalent of 20000 sheets of printing paper. A black half-tone image was then printed on 10 sheets of recording medium. For use as the recoding medium, a sheet of glossy paper was left standing in an environment at a temperature of 23°C and a relative humidity of 45% for 1 day. The presence of a convex portion in an electrophotographic belt causes scratches to the surface layer of a photosensitive drum in some cases. With the occurrence of scratches in the surface layer of a photosensitive drum, white lines or deep black lines derived from the scratches can be confirmed in the half-tone image. In the evaluation results, ranking was made based on the following criteria.

Rank A: No white lines and no deep black lines are confirmed.
Rank B: Although white lines and deep black lines can be confirmed, the image quality is not affected thereby.
Rank C: White lines and deep black lines can be confirmed, resulting in degradation of the image quality.

[Example 1]

1. Manufacturing of pellet of resin mixture

<Step of preliminary kneading of polyether ester amide>

A polyether ester amide (trade name: TPAE-10HP-10 (melting point: 168°C), manufactured by T&K TOKA Corporation) including zirconium stearate as a zirconium-containing compound was supplied to a twin screw extruder (trade name: TEX 30$\alpha$, manufactured by The Japan Steel Works Ltd.) and melted at 290°C, i.e. the temperature required for melting the thermoplastic polyester resin. Subsequently, a strand in a melted state was extruded from a dice to be cut by a cutter for manufacturing of pellets (pellet size: major axis:4mm, minor axis:3mm).
The purpose of this step is to form a cross-linked product derived from the zirconium-containing compound contained in the polyether ester amide. In the subsequent step of filtering described below, the cross-linked product is removed, so that formation of a cross-linked product derived from the zirconium-containing compound can be suppressed in the step of melt-kneading a thermoplastic polyester resin and the polyether ester amide further described below.

<Step of removing cross-linked product derived from zirconium-containing compound>

The pellet in amount of 100 g was dissolved in 1000 ml of phenol heated at a temperature of 80°C, so that a polyether ester amide solution was prepared. The solution was filtered through a membrane filter having a pore size of 0.8 $\mu$m (trade name: MF-Millipore, manufactured by Merck) under atmospheric pressure, so that undissolved components in the solution were filtered off. Then, the filtrate was added into water, and polyether ester amide was precipitated. The polyeter ester amide was heated at 100°C under a reduced pressure of 0.1 atm to remove water, so that a polyether ester amide of which foreign substances including cross-linked products derived from the zirconium-containing compound having a size of more than 10 $\mu$m being removed, was obtained.

<Step of preparing resin mixture>

As the thermoplastic polyester resin, a polyethylene naphthalate (trade name: TEONEX TN-8050SC (melting point: 262°C), manufactured by Teijin Limited) was provided. The polyethylene naphthalate had a melting point of 262°C and an intrinsic viscosity of 0.50 dl/g. The intrinsic viscosity was measured as follows. That is, the sample was dried in a vacuum at 130°C for one day, and the dried sample was pulverized. 80 mg of the pulverized product was weighted, and then was added to the mixed solvent of phenol/tetrachloroethane = 60/40 (volume ratio) to solve the pulverized product by heating the mixture at 80°C for 30 minutes. The solution was cooled to a normal temperature (temperature: 23°C), and the mixture solvent prepared was added to a measuring flask to adjust the total volume to 20ml to obtain a sample solution for measuring an intrinsic viscosity. Then, an intrinsic viscosity of the sample solution was measured at 30°C by using Ostwald Viscometer.
Using a twin screw extruder (trade name: TEX 30$\alpha$, manufactured by The Japan Steel Works Ltd.), 80 parts by mass of the polyethylene naphthalate and 20 parts by mass of polyether ester amide obtained in the step of removing cross-linked products derived from the zirconium-containing compound were melt-kneaded at a heat melt-kneading temperature of 290°C, for a heat melt-kneading time of 5 minutes, so that a resin mixture comprising polyester and polyether ester amide was obtained. The resin mixture thus obtained was pelletized with a cutter (trade name: Fancuter, manufactured by Hoshi Plastic), so that pellets of the resin mixture were obtained (pellet size: major axis:3mm, minor axis:2mm). The obtained pellets were dried at a temperature of 140°C for 6 hours.

2. Manufacturing of preform

The dried pellets of the resin mixture were injected into the hopper 48 of an injection molding apparatus having the structure illustrated in FIG. 2 (trade name: SE180D, manufactured by Sumitomo Heavy Industries, Ltd.). With a preset cylinder temperature of 290°C, the pellets were melted in screws 42 and 42A. The melt was injection molded into a die through a nozzle 41A, so that a preform 104 was manufactured. On this occasion, the injection molding die temperature was controlled at 30°C. The preform 104 was put in a heating apparatus 107 at a temperature of 500°C so as to be softened. The preform 104 was then heated at 500°C.

3. Manufacturing and evaluation of electrophotographic belt

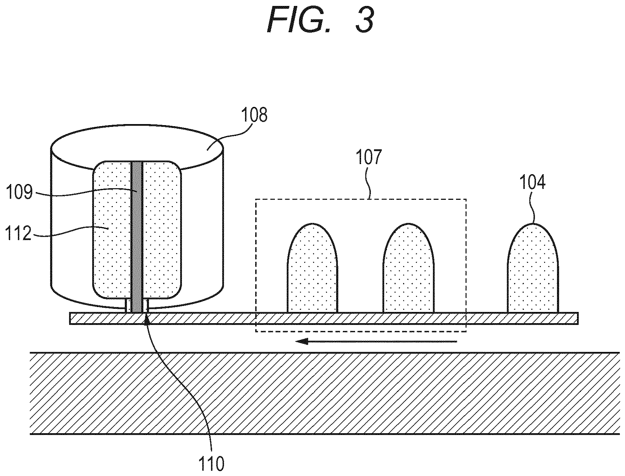

The preform 104 was then injected into a primary blow molding machine illustrated in FIG. 3. Blow forming was performed in a blow mold 108 with a mold temperature maintained at 110°C, using a stretching rod 109 and force of air (blow air injection part 110), at a preform temperature of 155°C, an air pressure of 0.3 MPa, and a stretching rod speed of 1000 mm/s, so that a blow-molded bottle 112 was obtained. Both ends of the blow-molded bottle were cut off, so that an electrophotographic belt No. 1 having endless belt shape was cut out. The electrophotographic belt No. 1 had a width of 246 mm, a length in the circumferential direction of 712 mm, and a thickness of 70 $\mu$m. The evaluation results on the electrophotographic belt No. 1 are shown in Table 1.

[Examples 2 and 3]

Electrophotographic belts No. 2 and No. 3 were obtained and evaluated in the same manner as in Example 1, except that the pore size of the filter for filtration was changed. The evaluation results are shown in Table 1.

[Comparative Examples 1 to 3]

Electrophotographic belts No. 11 to No. 13 were obtained and evaluated in the same manner as in Example 1, except that the pore size of the filter for filtration was changed. The evaluation results are shown in Table 1.

[Comparative Example 4]

Electrophotographic belt No. 14 was obtained and evaluated in the same manner as in Example 1, except that no filter for filtration was used. The evaluation results are shown in Table 1.

Table 1

| | | | Example | | | Comparative Example | | | |
|---|---|---|---|---|---|---|---|---|---|
| | | | 1 | 2 | 3 | 1 | 2 | 3 | 4 |
| Filtering | Pore size of filter ($\mu$m) | | 5 | 10 | 20 | 0.5 | 30 | 50 | No use |
| Evaluation 1 | Number of convex portions derived from zirconium (pieces/m$^2$) | | 0 | 1 | 8 | 0 | 13 | 18 | 29 |
| | Maximum height of convex portions ($\mu$m) | | - | 9 | 16 | 38 | 15 | 27 | 29 |
| Evaluation 2 | Zirconium content in belt (ppm) | | 52 | 65 | 88 | Undetectable | 105 | 117 | 187 |
| Evaluation 3 | Transfer properties of convex portions on belt surface and image properties | | A | A | B | C | C | C | C |

(continued)

| | | Example | | | Comparative Example | | | |
|---|---|---|---|---|---|---|---|---|
| | | 1 | 2 | 3 | 1 | 2 | 3 | 4 |
| Evaluation 4 | Scratch on surface layer of photosensitive drum caused by convex portions on belt surface | A | A | B | C | C | C | C |

In Examples 1 to 3, the cross-linked product derived from the zirconium-containing compound that occurred due to melting of polyether ester amide was removed in advance by filtering through a filter. As a result, the occurrence of convex portions on the surface of the electrophotographic belt was suppressed, and the occurrence of convex portions derived from foreign substances due to thermal degradation of polyether ester amide was also suppressed, so that the belt was excellent in transfer properties, image properties, and photosensitive drum scratching properties.

In Comparative Example 1, the cross-linked product derived from the zirconium-containing compound occurred due to melting of polyether ester amide was almost completely removed by filtering through a filter with very fine meshes. As a result, convex portions on the electrophotographic belt derived from foreign substances with the zirconium-containing compound as starting point were eliminated. However, with no zirconium content in the polyether ester amide, the resistance to heat of the polyether ester amide remarkably decreased, so that a large amount of convex portions occurred derived from foreign substances due to thermal degradation of the polyether ester amide. The transfer image properties and the photosensitive drum scratching properties were therefore poor.

In Comparative Examples 2 and 3, although the cross-linked product derived from the zirconium-containing compound that occurred due to melting of polyether ester amide was filtered off by a filter, the filtering performance was insufficient. As a result, due to convex portions on the surface of the electrophotographic belt derived from foreign substances with the zirconium-containing compound as starting point, the transfer image properties and the photosensitive drum scratching properties were poor.

In Comparative Example 4, due to convex portions on the surface of the electrophotographic belt derived from foreign substances with the zirconium-containing compound as starting point that occurred due to melting of polyether ester amide, the transfer image properties and the photosensitive drum scratching properties were poor.

While the present invention has been described with reference to exemplary embodiments, it is to be understood that the invention is not limited to the disclosed exemplary embodiments. The present invention is defined by the appended claims.

An electrophotographic belt with the occurrence frequency of convex portions derived from zirconium-containing compound that cause scratches on a photosensitive drum being suppressed as much as possible is provided.

**Claims**

1. An electrophotographic belt (6) comprising a resin layer comprising a melt-kneaded product which comprises a thermoplastic polyester resin, a polyether ester amide, and a zirconium-containing compound, **characterized in that** the number of convex portions arisen from a cross-linked product formed from the origination point of zirconium contained in the melt-kneaded product per m$^2$ on the outer surface of the electrophotographic belt (6) is 10 pieces or less, wherein the convex portions have a maximum height of 20 $\mu$m or less.

2. The electrophotographic belt (6) according to claim 1, wherein the thermoplastic polyester resin is at least one selected from the group consisting of a polyalkylene terephthalate, a polyalkylene naphthalate, and a copolymer of a polyalkylene terephthalate and a polyalkylene isophthalate.

3. The electrophotographic belt (6) according to claim 1 or 2, wherein the melt-kneaded product comprises the zirconium-containing compound at a content of 10 ppm or more and 10000 ppm or less, calculated as the amount of elemental zirconium, based on the mass of the melt-kneaded product.

4. The electrophotographic belt (6) according to any one of claims 1 to 3, having an endless belt shape.

5. An electrophotographic image forming apparatus equipped with an intermediate transfer belt (6) that is the electrophotographic belt (6) according to any one of claims 1 to 4.

6. A method for manufacturing an electrophotographic belt (6) comprising:

(1) providing a polyether ester amide containing a zirconium-containing compound by heating the polyether ester amide containing a zirconium-containing compound at a temperature equal to or higher than the melting point of the polyether ester amide to produce a cross-linked product derived from the zirconium containing compound in the polyether ester amide;
(2) preparing a solution of the polyether ester amide in which the cross-linked product derived from the zirconium containing compound is contained provided in the step (1);
(3) removing the cross-linked product derived from the zirconium-containing compound by filtering the solution;
(4) collecting the polyether ester amide from the solution;
(5) preparing a resin mixture comprising the polyether ester amide collected in the step (4) and a thermoplastic polyester resin by melt-kneading; and
(6) shaping an electrophotographic belt (6) from the resin mixture.

7. The method for manufacturing an electrophotographic belt (6) according to claim 6, wherein the thermoplastic polyester resin has an intrinsic viscosity of 1.4 dl/g or less.

8. The method for manufacturing an electrophotographic belt (6) according to claim 6 or 7, wherein the thermoplastic polyester resin has an intrinsic viscosity of 0.3 dl/g or more and 1.2 dl/g or less.

9. The method for manufacturing an electrophotographic belt (6) according to any one of claims 6 to 8, wherein the thermoplastic polyester is at least one selected from the group consisting of a polyalkylene terephthalate, a polyalkylene naphthalate, and a copolymer of a polyalkylene terephthalate and a polyalkylene isophthalate.

10. The method for manufacturing an electrophotographic belt (6) according to any one of claims 6 to 9, wherein the resin mixture comprises the polyether ester amide at a content of 3 mass% or more and 30 mass% or less based on the mass of the resin mixture.

11. The method for manufacturing an electrophotographic belt (6) according to any one of claims 6 to 10, wherein the resin mixture comprises the zirconium-containing compound at a content of 10 ppm or more and 10000 ppm or less, calculated as the amount of elemental zirconium, based on the mass of the resin mixture.

12. The method for manufacturing an electrophotographic belt (6) according to any one of claims 6 to 11, wherein the zirconium-containing compound is at least one selected from the group consisting of zirconium tetraacetylacetonate, zirconium monoacetylacetonate, zirconium ethylacetoacetate, zirconium octylate, zirconium stearate, zirconium sulfate tetrahydrate, and zirconium nitrate dihydrate.

13. The method for manufacturing an electrophotographic belt (6) according to any one of claims 6 to 12, wherein the solution is a phenol solution of the resin mixture.

14. The method for manufacturing an electrophotographic belt (6) according to any one of claims 6 to 13, wherein the step (3) comprises filtering the solution with a filter having a pore size of 5 to 20 $\mu$m.

15. The method for manufacturing an electrophotographic belt (6) according to any one of claims 6 to 14, wherein the step (6) comprises extruding the resin mixture into a cylindrical shape to shape an electrophotographic belt having an endless belt shape.

16. The method for manufacturing an electrophotographic belt (6) according to any one of claims 6 to 14, wherein the step (6) comprises:

shaping a test tube-shaped preform (104) from the resin mixture;
stretch blowing the preform (104) to obtain a blow-molded bottle (112); and
cutting out an electrophotographic belt having an endless belt shape from the blow-molded bottle (112).

**Patentansprüche**

1. Elektrofotografisches Band (6), das eine Harzschicht umfasst, die ein schmelzgeknetetes Produkt umfasst, welches ein thermoplastisches Polyesterharz, ein Polyetheresteramid und eine zirconiumhaltige Verbindung umfasst, **dadurch gekennzeichnet, dass** die Anzahl der konvexen Teile, die aus einem vernetzten Produkt herrühren, das von dem Ursprungspunkt des Zirconiums enthalten in dem schmelzgekneteten Produkt gebildet wird, pro m² auf der äußeren Oberfläche des elektrofotografischen Bandes (6) 10 Stück oder weniger ist, wobei die konvexen Teile eine maximale Höhe von 20 μm oder weniger aufweisen.

2. Elektrofotografisches Band (6) nach Anspruch 1, wobei das thermoplastische Polyesterharz wenigstens eines ausgewählt aus der Gruppe bestehend aus einem Polyalkylenterephthalat, einem Polyalkylennaphthalat und einem Copolymer eines Polyalkylenterephthalats und eines Polyalkylenisophthalats ist.

3. Elektrofotografisches Band (6) nach Anspruch 1 oder 2, wobei das schmelzgeknetete Produkt die zirconiumhaltige Verbindung in einem Gehalt von 10 ppm oder mehr und 10000 ppm oder weniger umfasst, berechnet als die Menge des elementaren Zirconiums, basierend auf der Masse des schmelzgekneteten Produkts.

4. Elektrofotografisches Band (6) nach einem der Ansprüche 1 bis 3, das eine endlose Bandform aufweist.

5. Elektrofotografisches Bilderzeugungsgerät ausgestattet mit einem Zwischenübertragungsband (6), das das elektrofotografische Band (6) nach einem der Ansprüche 1 bis 4 ist.

6. Verfahren für die Herstellung eines elektrofotografischen Bandes (6), umfassend:

   (1) Bereitstellen eines Polyetheresteramids, das eine zirconiumhaltige Verbindung enthält, durch Erwärmen des Polyetheresteramids, das eine zirconiumhaltige Verbindung enthält, bei einer Temperatur gleich oder höher als der Schmelzpunkt des Polyetheresteramids, um ein vernetztes Produkt herzustellen, das aus der zirconiumhaltigen Verbindung in dem Polyetheresteramid stammt;
   (2) Zubereiten einer Lösung des Polyetheresteramids, in welchem das vernetzte Produkt, das aus der zirconiumhaltigen Verbindung stammt, enthalten ist, das in dem Schritt (1) bereitgestellt wird;
   (3) Entfernen des vernetzten Produkts, das aus der zirconiumhaltigen Verbindung stammt, durch Filtrieren der Lösung;
   (4) Sammeln des Polyetheresteramids aus der Lösung;
   (5) Zubereiten einer Harzmischung durch Schmelzkneten, die das Polyetheresteramid gesammelt in dem Schritt (4) und ein thermoplastisches Polyesterharz umfasst; und
   (6) Formen eines elektrofotografischen Bands (6) aus der Harzmischung.

7. Verfahren für die Herstellung eines elektrofotografischen Bands (6) nach Anspruch 6, wobei das thermoplastische Polyesterharz eine Grenzviskosität von 1,4 dl/g oder weniger aufweist.

8. Verfahren für die Herstellung eines elektrofotografischen Bands (6) nach Anspruch 6 oder 7, wobei das thermoplastische Polyesterharz eine Grenzviskosität von 0,3 dl/g oder mehr und 1,2 dl/g oder weniger aufweist.

9. Verfahren für die Herstellung eines elektrofotografischen Bands (6) nach einem der Ansprüche 6 bis 8, wobei das thermoplastische Polyester wenigstens eines ausgewählt aus der Gruppe bestehend aus einem Polyalkylenterephthalat, einem Polyalkylennaphthalat und einem Copolymer eines Polyalkylenterephthalats und eines Polyalkylenisophthalats ist.

10. Verfahren für die Herstellung eines elektrofotografischen Bands (6) nach einem der Ansprüche 6 bis 9, wobei die Harzmischung das Polyetheresteramid in einem Gehalt von 3 Massen-% oder mehr und 30 Massen-% oder weniger basierend auf der Masse der Harzmischung umfasst.

11. Verfahren für die Herstellung eines elektrofotografischen Bands (6) nach einem der Ansprüche 6 bis 10, wobei die Harzmischung eine zirconiumhaltige Verbindung in einem Gehalt von 10 ppm oder mehr und 10000 ppm oder weniger enthält, berechnet als die Menge des elementaren Zirconiums, basierend auf der Masse der Harzmischung.

12. Verfahren für die Herstellung eines elektrofotografischen Bands (6) nach einem der Ansprüche 6 bis 11, wobei die zirconiumhaltige Verbindung wenigstens eine ausgewählt aus der Gruppe bestehend aus Zirconiumtetraacetylacetonat, Zirconiummonoacetylacetonat, Zirconiumethylacetoacetat, Zirconiumoctylat, Zirconiumstearat, Zirconiumsulfattetrahydrat und Zirconiumnitratdihydrat ist.

**13.** Verfahren für die Herstellung eines elektrofotografischen Bands (6) nach einem der Ansprüche 6 bis 12, wobei die Lösung eine Phenollösung der Harzmischung ist.

**14.** Verfahren für die Herstellung eines elektrofotografischen Bands (6) nach einem der Ansprüche 6 bis 13, wobei der Schritt (3) das Filtrieren der Lösung mit einem Filter, der eine Porengröße von 5 bis 20 $\mu$m aufweist, umfasst.

**15.** Verfahren für die Herstellung eines elektrofotografischen Bands (6) nach einem der Ansprüche 6 bis 14, wobei der Schritt (6) das Extrudieren der Harzmischung in eine zylindrische Form umfasst, um ein elektrofotografisches Band zu formen, das eine endlose Bandform aufweist.

**16.** Verfahren für die Herstellung eines elektrofotografischen Bands (6) nach einem der Ansprüche 6 bis 14, wobei der Schritt (6) umfasst:

Formen einer reagenzglasförmigen Vorform (104) aus der Harzmischung;
Streckblasen der Vorform (104), um eine blasgeformte Flasche (112) zu erhalten; und
Ausschneiden eines elektrofotografischen Bands mit einer endlosen Bandform aus der blasgeformten Flasche (112).

## Revendications

**1.** Bande électrophotographique (6) comprenant une couche de résine possédant un produit malaxé à l'état fondu qui comprend une résine polyester thermoplastique, un polyéther-ester-amide et un composé contenant du zirconium, **caractérisée en ce que** le nombre de parties convexes provenant d'un produit réticulé formé à partir du point d'origine de zirconium contenu dans le produit malaxé à l'état fondu par m$^2$ sur la surface extérieure de la bande électrophotographique (6) est inférieur ou égal à 10 unités, où les parties convexes ont une hauteur maximale inférieure ou égale à 20 $\mu$m.

**2.** Bande électrophotographique (6) selon la revendication 1, dans laquelle la résine polyester thermoplastique est au moins l'une sélectionnée dans le groupe constitué par un téréphtalate de polyalkylène, un naphtalate de polyalkylène et un copolymère d'un téréphtalate de polyalkylène et d'un isophtalate de polyalkylène.

**3.** Bande électrophotographique (6) selon la revendication 1 ou 2, dans laquelle le produit malaxé à l'état fondu comprend le composé contenant du zirconium selon une teneur supérieure ou égale à 10 ppm et inférieure ou égale à 10 000 ppm, calculée en tant que la quantité de zirconium élémentaire, sur la base de la masse du produit malaxé à l'état fondu.

**4.** Bande électrophotographique (6) selon l'une quelconque des revendications 1 à 3, ayant une forme de bande sans fin.

**5.** Appareil de formation d'image électrophotographique équipé d'une bande de transfert intermédiaire (6) qui est la bande électrophotographique (6) selon l'une quelconque des revendications 1 à 4.

**6.** Procédé de fabrication d'une bande électrophotographique (6) comprenant les étapes consistant à :

(1) obtenir un polyéther-ester-amide contenant un composé contenant du zirconium par chauffage du polyéther-ester-amide contenant un composé contenant du zirconium à une température égale ou supérieure au point de fusion du polyéther-ester-amide pour produire un produit réticulé dérivé du composé contenant du zirconium dans le polyéther-ester-amide ;
(2) préparer une solution du polyéther-ester-amide dans laquelle est contenu le produit réticulé dérivé du composé contenant du zirconium obtenu à l'étape (1) ;
(3) éliminer le produit réticulé dérivé du composé contenant du zirconium par une filtration de la solution ;
(4) collecter le polyéther-ester-amide à partir de la solution ;
(5) préparer un mélange de résine comprenant le polyéther-ester-amide collecté à l'étape (4) et une résine polyester thermoplastique par malaxage à l'état fondu ; et
(6) former une bande électrophotographique (6) à partir du mélange de résine.

**7.** Procédé de fabrication d'une bande électrophotographique (6) selon la revendication 6, dans lequel la résine polyester thermoplastique a une viscosité intrinsèque inférieure ou égale à 1,4 dl/g.

**8.** Procédé de fabrication d'une bande électrophotographique (6) selon la revendication 6 ou 7, dans lequel la résine polyester thermoplastique a une viscosité intrinsèque supérieure ou égale à 0,3 dl/g et inférieure ou égale à 1,2 dl/g.

**9.** Procédé de fabrication d'une bande électrophotographique (6) selon l'une quelconque des revendications 6 à 8, dans lequel le polyester thermoplastique est au moins l'un sélectionné dans le groupe constitué par un téréphtalate de polyalkylène, un naphtalate de polyalkylène et un copolymère d'un téréphtalate de polyalkylène et d'un isophtalate de polyalkylène.

**10.** Procédé de fabrication d'une bande électrophotographique (6) selon l'une quelconque des revendications 6 à 9, dans lequel le mélange de résine comprend le polyéther-ester-amide selon une teneur supérieure ou égale à 3 % en masse et inférieure ou égale à 30 % en masse sur la base de la masse du mélange de résine.

**11.** Procédé de fabrication d'une bande électrophotographique (6) selon l'une quelconque des revendications 6 à 10, dans lequel le mélange de résine comprend le composé contenant du zirconium selon une teneur supérieure ou égale à 10 ppm et inférieure ou égale à 10 000 ppm, calculée en tant que la quantité de zirconium élémentaire, sur la base de la masse du mélange de résine.

**12.** Procédé de fabrication d'une bande électrophotographique (6) selon l'une quelconque des revendications 6 à 11, dans lequel le composé contenant du zirconium est au moins l'un sélectionné dans le groupe constitué par un tétraacéthylacétonate de zirconium, un monoacéthylacétonate de zirconium, un éthylacétoacétate de zirconium, un octylate de zirconium, un stéarate de zirconium, un sulfate de zirconium tétrahydraté et un nitrate de zirconium dihydraté.

**13.** Procédé de fabrication d'une bande électrophotographique (6) selon l'une quelconque des revendications 6 à 12, dans lequel la solution est une solution phénolée du mélange de résine.

**14.** Procédé de fabrication d'une bande électrophotographique (6) selon l'une quelconque des revendications 6 à 13, dans lequel l'étape (3) consiste à filtrer la solution au moyen d'un filtre ayant une taille de pore de 5 à 20 $\mu$m.

**15.** Procédé de fabrication d'une bande électrophotographique (6) selon l'une quelconque des revendications 6 à 14, dans lequel l'étape (6) consiste à extruder le mélange de résine en une forme cylindrique pour former une bande électrophotographique ayant une forme de bande sans fin.

**16.** Procédé de fabrication d'une bande électrophotographique (6) selon l'une quelconque des revendications 6 à 14, dans lequel l'étape (6) consiste à :

former une préforme en forme d'éprouvette (104) à partir du mélange de résine ;
souffler avec étirage la préforme (104) pour obtenir une bouteille moulée par soufflage (112) ; et
découper une bande électrophotographique ayant une forme de bande sans fin à partir de la bouteille moulée par soufflage (112).

# FIG. 1

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11237795 B
- JP 2014132329 A
- US 2016202639 A1

- WO 2011034013 A1
- JP 2001302890 A
- JP 2002285017 A